# EUROPÄISCHE PATENTSCHRIFT

(11) **EP 1 078 172 B1**
(45) Veröffentlichungstag und Bekanntmachung des Hinweises auf die Patenterteilung: **14.12.2005**
(21) Anmeldenummer: 99920794.7
(22) Anmeldetag: 27.04.1999
(51) Int. Cl.: F16C 33/10

(54) **VERFAHREN UND VORRICHTUNG ZUR SCHMIERMITTELRÜCKFÖRDERUNG AUS EINEM GLEITLAGER**
METHOD AND DEVICE FOR FEED BACK OF LUBRICANTS FROM A PLAIN BEARING
PROCEDE ET DISPOSITIF POUR REPRENDRE UN LUBRIFIANT D'UN PALIER LISSE

(30) Priorität: 02.05.1998 DE 19819686
(43) Veröffentlichungstag der Anmeldung: 28.02.2001
(73) Patentinhaber: SMS SCHLOEMANN-SIEMAG AKTIENGESELLSCHAFT, 40237 Düsseldorf (DE)
(72) Erfinder: OHRNDORF, Henning, D-57572 Niederfischbach (DE); THIEL, Hermann, D-57076 Siegen (DE)
(74) Vertreter: Valentin, Ekkehard
(86) Internationale Anmeldenummer: PCT/EP1999/002830
(87) Internationale Veröffentlichungsnummer: WO 1999/057449

(56) Entgegenhaltungen:
- WO-A-92/16786
- DE-B- 1 301 642
- DE-C- 4 427 830
- US-A- 1 342 063
- US-A- 4 632 650

## Beschreibung

Die Erfindung betrifft ein Verfahren und eine Vorrichtung zur Entleerung eines einem Gleitlager, insbesondere Walzenzapfenlager eines Einbaustückes, geregelt zugeführten Schmiermittels, vorzugsweise Öl, das in das Lagergehäuse einströmt und unten aus einem Schmiermittelsumpf vakuumgestützt nach oben entleert wird. Durch die US-A-1.342.063 ist eine solche vakuumgestützte Schmiermittel-Entleerung bekanntgeworden, dort allerdings aus dem Sumpf eines Verbrennungsmotors..

Weiter sind in der Walzwerktechnik Lageranordnungen, bei denen Schmiermittel geregelt zugeführt und aus einem Sumpf rückgefördert wird, als sogenannte Ölflutlager bekannt; bei ihrem Einsatz vor allem als Walzenzapfenlager dienen sie zur Übertragung von Anstellkräften in Block- Brammen- und Grobblechwalzgerüsten sowie in Warm- und Kaltbandwalzwerken der Stahl- und Nichteisenmetallindustrie. Bei im wesentlichen gleicher Ausführung sind sie für alle in Walzwerken vorkommenden Walzkraft- und Walzgeschwindigkeitsbereichen, für Naß- oder Trockenbetrieb sowie für Einweg- oder Umkehrbetrieb geeignet. Ein großes Lastaufnahmevermögen ermöglicht eine Anpassung an die in Walzwerken vorkommenden Drehzahlen und Lasten. Im Zusammenspiel mit dem einen Walzenzapfen aufnehmenden Einbaustück bildet das Gleit- bzw. Ölflutlager ein Schmierölverteilungs- und Umflutungssystem, das einen großen Kühlöldurchsatz bei sicherer hydrodynamischer Schmierfilmbildung gewährleistet. Zur Öl- bzw. Schmiermittelversorgung sind die Einbaustücke über Zu- und Rück- bzw. Ablaufleitungen an mindestens einen eine Betriebspumpe aufweisenden Ölsammelbehälter angeschlossen.

Das Schmiermittel bzw. -öl wird den Einbaustücken mit Hilfe einer ein Druckregelventil umfassenden Druckregelung und einer festen Drossel druckkontrolliert zugeführt, wobei die Einspeisöffnung mittig bis oberhalb des Walzenzapfens liegend angeordnet und über eine Schlauchleitung mit der Zulaufleitung verbunden ist. Nach dem Schmiervorgang läuft das sich in einem Schmiermittel-/ Ölsumpf - in der Regel sind zwei solche durch eine Querbohrung miteinander verbundenen Sümpfe vorhanden, und zwar einer am zapfenseitigen Ende und der andere dahinter in Richtung auf den Ballen liegend - sammelnde Schmiermittel bzw. -öl gravitär aus dem Einbaustück über zwei relativ große Abläufe mit den dazugehörigen, zu den Rücklaufleitungen führenden Schlauchleitungen ab, d.h. zurück in den Ölsammelbehälter. Diese bekannten, im praktischen Betrieb in großem Umfang eingesetzten Gleitlager als Ölflutlager mit hydrodynamischer Schmierfilmbildung, die im zusammengebauten Zustand mit dem Einbaustück eine geschlossene öl- und schmutzdichte Einheit bilden, die auf dem Walzenzapfen aufgezogen oder von ihm abgezogen wird, benötigen große Schmiermittelsümpfe, die den Einbauraum für andere Komponenten im Ständerfenster eines Walzgerüstes beeinträchtigen. Dies weiterhin auch wegen der von den Ölsümpfen abgehenden großen Schlauchleitungen zum Rücklauf des Schmieröls in den Ölsammelbehälter.

Der Erfindung liegt die Aufgabe zugrunde, ein Verfahren und eine Vorrichtung der gattungsgemäßen Art ohne die genannten Nachteile zu schaffen, insbesondere eine verbesserte Entleerung bzw. Rückführung des Schmiermittels aus dem jeweiligen Sumpf des Einbaustückes bzw. Lagergehäuses zu ermöglichen.

Diese Aufgabe wird mit einem Verfahren erfindungsgemäß durch die im kennzeichnenden Teil des unabhängigen Anspruchs 1 angegebenen Merkmale gelöst. Die sich von der jahrzehntelangen Praxis der gravitären Rückförderung aus dem Sumpf von Gleitlagern gänzüch abkehrende vakuumgestützte - bei geregeltem Vakuum - Schmiermittel-Rückführung aus dem belüfteten Sumpf, auf dem bzw. denen der atmosphärische Druck lastet, ermöglicht wegen des von beispielsweise einer Schraubenspindelpumpe erzeugten, ständig anstehenden Vakuums nicht nur eine schnellere Entleerung und entsprechend weniger Raum benötigende Schmiermittelsümpfe, sondern macht auch die von den Schmiermittelsümpfen nach unten abgehenden Ölablaufschläuche entbehrlich. Es läßt sich daher in mehrfacher Weise Einbauraum für andere Komponenten und/oder z. B. eine Konturierung der Einbaustücke gewinnen. Bei einem Walzenwechsei lassen sich die Einbaustücke zudem durch einen kontrollierten Vakuumstoß komplett entleeren, wodurch Leckagen beim Transport vermieden werden, wie auch insgesamt die Wartung vereinfacht wird.

Indem das Lagergehäuse mit dem Sumpf belüftet und die einströmende Luftmenge gemessen wird, läßt sich einerseits berücksichtigen, daß sich ein aufgrund eines im Einbaustück bedingt durch den sichelförmigen Lagerlauf - und damit oben und unten unterschiedlich hohem statischen Druck - möglicherweise auftretendes Vakuum nicht nachteilig auf die vakuumgestützte Entleerung auswirken kann, da durch die Be- bzw. Entlüftung ein Entweichen möglich ist. Andererseits kann durch die Messung der einströmenden Luftmenge eine definierte Vakuumregelgröße erreicht und eingestellt werden, z.B. eine Luftzufuhr von 1 l/min in das Einbaustück.

Eine Vorrichtung zum vakuumgestützten Entleeren des Schmiermittels sieht vor, daß das Lagergehäuse mit einer von oben bis in den Schmiermittelsumpf - bzw. bis in eine die beiden vorhandenen Sümpfe miteinander verbindende Querbohrung - reichenden Entleerungsbohrung ausgebildet sowie über eine lagerobenseitig angeordnete Lüftungsbohrung über eine Ausgangsleitung mit der Atmosphäre verbunden ist, wobei die Entleerungsbohrung in einer an eine Vakuumquelle angeschlossenen Leitung ein Druckregelventil aufweist, das mit einem in der Ausgangsleitung der Lüftungsbohrung angeordneten Luftdurchflußmeßgerät in Wirkverbindung steht. Statt zwei gravitärer Ablaufleitungen ist hier lediglich eine Ausgangsleitung zur Schmiermittel-Entleerung erforderlich, die wegen der aufgrund des anstehenden Vakuums bei gleicher Zeiteinheit größeren Abfuhrmenge außerdem kleiner als bisher dimensioniert werden kann. Es sind Schlauchleitungen nur noch oberhalb der Mitte des Lagergehäuses angeordnet, nämlich einmal für die Entleerungsbohrung und zum anderen für die Entlüftungsbohrung sowie die unveränderte Schmiermittelzuführung von oben; alle anderen Komponenten bzw. Bauteile der Schmiermittelanlage befinden sich in einem nicht störenden Bereich entfernt von der Lageranordnung bzw. den Einbaustücken.

Das anstehende Vakuum sorgt dafür, daß das Schmiermittel aus dem Sumpf quasi "schnorchelnd" über die gegebenenfalls von einem eingesetzten bzw. -gegossenen Rohr gebildete Entleerungsbohrung (Schnorchelrohr) entnommen und rückgefördert wird.

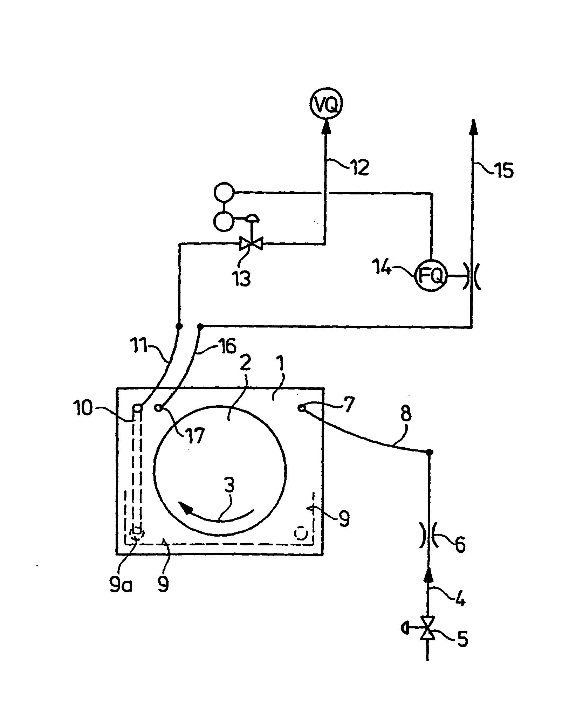

Weitere Einzelheiten und Vorteile der Erfindung ergeben sich aus den Ansprüchen und der nachfolgenden Beschreibung, in der ein in der einzigen Zeichnungs-Figur für ein horizontales Einbaustück mit Stützwalzenzapfenlager schematisch dargestelltes Ausführungsbeispiel der Erfindung näher erläutert ist.

Von einer Walzenanordnung in einem weiter nicht dargestellten Walzgerüst zeigt die Figur als Einzelheit ein Einbaustück 1 mit einem darin gelagerten Walzenzapfen 2 einer in Pfeilrichtung 3 umlaufenden Walzwerkswalze. Der Lagerung des Walzenzapfens 1 ist ein in seinen weiteren Einzelheiten nicht gezeigtes Schmierölverteilungs- und Umflutungssystem zugeordnet, das eine von einem Ölsammelbehälter ausgehende Schmiermittelzulaufleitung 4 mit darin integriertem Druckregelventil 5 und Festdrossel 6 aufweist, was eine geregelte Schmiermittelzufuhr über eine in dem Einbaustück 1 oben bzw. seitlich angeordnete Einlauföffnung 7 ermöglicht, die über eine Schlauchleitung 8 mit der Zulaufleitung 4 verbunden ist. Nach dem Schmiervorgang wird das Schmiermittel in einem in dem Einbaustück 1 vorgesehenen, gestrichelt angedeuteten Schmiermittelsumpf 9 gesammelt, dem sich in der Zeichnungsebene hinten, d.h. ballenseitig liegend ein weiterer solcher Sumpf anschließt; die beiden Sümpfe sind durch eine schematisch als gestrichelter Kreis angedeutete Querbohrung 9a miteinander verbunden.

Zur Rückförderung des Schmiermittels aus dem Schmiermittelsumpf 9 in den Ölsammelbehälter ist das Einbaustück bzw. Lagergehäuse 1 mit einer von oben bis in die Querbohrung 9a der Schmiermittelsümpfe 9 reichenden Entleerungsbohrung 10 ausgebildet, von der eine Entleerungs-Schlauchleitung 11 zu einer Vakuumleitung 12 führt, die an eine nicht gezeigte Vakuumquelle VQ angeschlossen ist. Die Vakuumleitung 12 weist als integrierten Bestandteil ein Druckregelventil 13 auf, das mit einem Durchflußmeßgerät 14 bzw. FQ in Wirkverbindung steht. Dieses ist in einer Ausgangsleitung 15 angeordnet, die über eine Lüftungs-Schlauchleitung 16 mit einer im Zenit des Einbaustückes 1 parallel zu der Entleerungsbohrung 10 angeordneten Lüftungsbohrung 17 verbunden ist; sie mündet über die Leitungen 16 bzw. 15 in der Atmosphäre.

Bei der vakuumgestützten Entleerung des Schmiermittelsumpfes 9 nach oben aus dem Einbaustück 1 heraus ermöglicht das Durchflußmeßgerät 14 in der Ausgangsleitung 15 der Lüftungsbohrung 17 im Zusammenspiel mit dem Druckregelventil 13 der Vakuumleitung 12 anhand der ermittelten Meßwerte eine definierte Einstellung der Vakuumregelgröße, d.h. der Be- bzw. Entlüftung des Lagergehäuses 1 samt Sümpfen 9 zur Entsorgung des Schmiermittels über die Entleerungsbohrung 10.

## Patentansprüche

1. Verfahren zur Entleerung eines einem Gleitlager, insbesondere Walzenzapfenlager (2) eines Einbaustückes (1), geregett zugeführten Schmiermittels, vorzugsweise Öl, das in das Lagergehäuse einströmt und unten aus einem Schmtenruttelsumpf (9) vakuumgestützt nach oben entleert wird,
**dadurch gekennzeichnet,**
**daß** das Vakuum geregelt sowie das Lagergehäuse belüftet und die einströmende Luftmenge gemessen wird, wobei zur Entleerung ein Druckregelventil (13) einer an eine Vakuumquelle angeschlossenen Leitung (12) mit einem Luftdurchflußmeßgerät (14) in einer Ausgangsleitung (15) einer Lüftungsbohrung (17) in Wirkverbindung gebracht wird.

2. Vorrichtung zur Entleerung eines einem Gleitlager, insbesondere Walzenzapfenlager (2) eines Einbaustückes (1), geregelt zugeführten Schmiermittels, vorzugsweise Öl, das in das Lagergehäuse einströmt und unten aus einem Schmiermittelsumpf (9) entleert wird, insbesondere zum Durchführen des Verfahrens nach Anspruch 1,
**dadurch gekennzeichnet,**
**daß** das Lagergehäuse (1) mit einer von oben bis in den Schmiermittelsumpf (9) reichenden Entleerungsbohrung (10) ausgebildet sowie über mindestens eine lagerobenseitig angeordnete Lüftungsbohrung (17) über eine Ausgangsleitung (15,16) mit der Atmosphäre verbunden ist, wobei die Entleerungsbohrung (10) in einer an eine Vakuumquelle (VQ) angeschlossenen Leitung (12) ein Druckregelventil (13) aufweist, das mit einem in der Ausgangsleitung (15) der Lüftungsbohrung (17) angeordneten Luftdurchflußmeßgerät (14) in Wirkverbindung steht.

## Claims

1. Method of emptying a lubricant, preferably oil, which is supplied under regulation to a slide bearing, particularly a roll pin bearing (2) of a chock (1) and which flows into the bearing housing and at the bottom is emptied upwardly from a lubricant sump (9) with vacuum assistance, **characterised in that** the vacuum is regulated as well as the bearing housing ventilated and the inflowing air quantity measured, wherein, for the emptying, a pressure regulating valve (13) of a duct (12) connected with a vacuum source is brought into operative connection with an air throughflow measuring apparatus (14) in an outlet duct (15) of a ventilating bore (17).

2. Device for emptying a lubricant, preferably oil, which is supplied under regulation to a slide bearing, particularly a roll pin bearing (2) of a chock (1) and which flows into the bearing housing and at the bottom is emptied from a lubricant sump (9), particularly for carrying out the method according to claim 1, **characterised in that** the bearing housing (1) is formed with an emptying bore (10), which reaches from the top to the lubricant sump (9), as well as is connected with the atmosphere by way of at least one ventilation bore (17), which is arranged at the bearing upper side, via an outlet duct (15, 16), wherein the emptying bore (10) has in a duct (12) connected with a vacuum source (VQ) a pressure regulating valve (13) disposed in operative connection with an air throughflow measuring apparatus (14) arranged in the outlet duct (15) of the ventilating bore (17).

## Revendications

1. Procédé pour vidanger un lubrifiant, de préférence de l'huile, alimenté de manière régulée dans un palier lisse, en particulier un palier (2) de tourillon de cylindre d'une empoise (1), qui entre dans le bâti du palier et qui est vidangé dans le bas d'une réserve de lubrifiant (9) sous vide vers le haut, **caractérisé en ce que** le vide est régulé et la bâti du palier est aéré et la quantité d'air qui entre est mesurée, une soupape de régulation (13) de la pression d'une conduite (12) raccordée à une source de vide étant raccordée de manière active avec un appareil de mesure du débit d'air (14) dans une conduite de sortie (15) d'un trou d'aération (17).

2. Dispositif pour vidanger un lubrifiant, de préférence de l'huile, alimenté de manière régulée dans un palier lisse, en particulier un palier (2) de tourillon de cylindre d'une empoise (1), qui entre dans le bâti du palier et qui est vidangé dans le bas d'une réserve de lubrifiant (9), en particulier pour réaliser le procédé selon la revendication 1, **caractérisé en ce que** le bâti du palier (1) est réalisé avec un trou de vidange (10) s'étendant à partir du haut jusque dans la réserve de lubrifiant (9) et est raccordé à l'atmosphère via au moins un trou d'aération (17) disposé sur la partie supérieure du palier via une conduite de sortie (15, 16), le trou de vidange (10) présentant dans une conduite (12) raccordée à une source de vide (VQ) une soupape de régulation (13) de la pression qui est raccordée de manière active à un appareil de mesure du débit d'air (14) disposé dans la conduite de sortie (15) du trou d'aération (17).
